(19) Europäisches Patentamt
European Patent Office
Office européen des brevets

(11) EP 0 760 765 B1

(12) **EUROPÄISCHE PATENTSCHRIFT**

(45) Veröffentlichungstag und Bekanntmachung des Hinweises auf die Patenterteilung:
**21.10.1998 Patentblatt 1998/43**

(21) Anmeldenummer: 95920049.4

(22) Anmeldetag: 16.05.1995

(51) Int. Cl.$^6$: **B60T 13/72**, B60T 7/16, B60T 7/22, B60T 8/32

(86) Internationale Anmeldenummer:
PCT/EP95/01860

(87) Internationale Veröffentlichungsnummer:
WO 95/32878 (07.12.1995 Gazette 1995/52)

(54) **VERFAHREN ZUM REGELN DES BREMSDRUCKES**

PROCESS FOR ADJUSTING BRAKE PRESSURE

PROCEDE DE REGLAGE DE LA PRESSION DE FREINAGE

(84) Benannte Vertragsstaaten:
**DE ES FR GB**

(30) Priorität: **26.05.1994 DE 4418270**

(43) Veröffentlichungstag der Anmeldung:
**12.03.1997 Patentblatt 1997/11**

(73) Patentinhaber:
**ITT Automotive Europe GmbH**
**60488 Frankfurt am Main (DE)**

(72) Erfinder:
• **WAGNER, Wilfried**
**D-35625 Hüttenberg (DE)**
• **DUSIL, Vladimir**
**D-64347 Griesheim (DE)**
• **BAUER, Jürgen**
**D-65187 Wiesbaden (DE)**

(56) Entgegenhaltungen:
EP-A- 0 379 329          EP-A- 0 478 396
WO-A-90/13463           DE-A- 4 029 793
DE-A- 4 217 409         DE-A- 4 238 333
DE-C- 4 208 496         GB-A- 2 139 722

• PATENT ABSTRACTS OF JAPAN vol. 8 no. 276 (M-346) [1713] ,18.Dezember 1984 & JP,A,59 145652 (MITSUBISHI) 21.August 1984,
• PATENT ABSTRACTS OF JAPAN vol. 10 no. 277 (M-519) [2333] ,19.September 1986 & JP,A,61 098662 (TOKICO) 16.Mai 1986,

**Beschreibung**

Die Erfindung betrifft ein Verfahren zum Regeln des Bremsdruckes in einer mit einem ABS-System ausgerüsteten Kraftfahrzeugbremsanlage, die einen unabhängig vom Fahrerwillen mittels eines Elektromagneten betätigbaren Unterdruckbremskraftverstärker sowie einen dem Unterdruckbremskraftverstärker nachgeschalteten Hauptbremszylinder aufweist, wobei Drehzahlen der einzelnen Fahrzeugräder ermittelt werden.

Ein derartiges Verfahren ist z.B. aus der DE- 42 17 409 A1 bekannt. Bei der Durchfuhrung des darin beschriebenen Verfahrens wird der in der Radbremse eingesteuerte Bremsdruck mit einem abgespeicherten Bremsdruck-Sollwert verglichen, wobei in Abhängigkeit von dem Vergleichsergebnis der Bremskraftverstärker im Sinne einer Änderung der Verstärkungskraft angesteuert wird. Weniger vorteilhaft sind bei dem bekannten Verfahren die mit der Druckmessung verbundenen hohen Kosten anzusehen.

Aus der DE 42 38 333 A1 ist ein Unterdruckbremskraftverstärker bekannt, dessen Steuerventil mittels eines Elektromagneten elektrisch betätigbar ist. Der mit dem Ventilkörper des Steuerventils zusammenwirkende Elektromagnet ist dabei mit einem das Steuerventil mechanisch betätigenden Ventilkolben fest verbunden, wobei der Ventilkörper in einem das Steuerventil aufnehmenden Steuergehäuse einen pneumatischen Raum begrenzt, der über Durchlässe mit der belüftbaren Arbeitskammer des Bremskraftverstärkers in Verbindung steht, so daß der Ventilkörper ständig druckausgeglichen ist. Es ist daher Aufgabe der vorliegenden Erfindung ein Verfahren zum Regeln eines Bremsdruckes der eingangs genannten Art vorzuschlagen, das es ermöglicht, unter Verwendung einer bei heutigen blockiergeschützten Bremsanlagen ohnehin vorhandenen Information eine genaue analoge Regelung des in den Radbremsen des Fahrzeuges eingesteuerten Druckes zu realisieren.

Diese Aufgabe wird erfindungsgemäß dadurch gelöst, daß ein an jedem Rad während einer Abbremsung gemessener Drehzahl-Istwert mit einem abgespeicherten gewünschten Drehzahl-Sollwert verglichen wird und daß in Abhängigkeit von dem Vergleichsergebnis der dem Elektromagneten zuzuführende Strom direkt proportional so geregelt wird, daß jedem Wert der vom Elektromagneten aufgebrachten Fremdbetätigungskraft ein Wert des im Hauptbremszylinder eingesteuerten hydraulischen Druckes zugeordnet wird, derart, daß einer Erhöhung der Fremdbetätigungskraft eine Erhöhung des hydraulischen Druckes entspricht.

Eine Erhöhung der Qualität des vorgeschlagenen Regelungsprozesses wird nach einem vorteilhaften Erfindungsmerkmal dadurch erreicht, daß der dem Elektromagneten zuzuführende Strom proportional dem auf den Ventilkörper wirkenden pneumatischen Differenzdruck geregelt wird. Dabei ist es besonders vorteilhaft, wenn eine mit dem Ventilkörper des Steuerventils zusammenwirkende, pneumatische Wirkfläche vorgesehen ist, die, mit dem pneumatischen Differenzdruck beaufschlagt, eine Kraft aufbringt, die der vom Elektromagneten aufgebrachten Betätigungskraft entgegenwirkt.

Die der vom Elektromagneten aufgebrachten Fremdbetätigungskraft entgegenwirkende Kraft setzt sich aus der Kraft einer den Ventilkörper in Schließrichtung des Steuerventils vorspannenden Ventilfeder sowie zweier entgegengesetzt zueinander wirkender pneumatischer Kraftkomponenten zusammen, wobei die erste, der Kraft der Ventilfeder entgegenwirkende Kraftkomponente sich aus der pneumatischen Druckdifferenz zwischen dem Atmosphärendruck und dem in der Arbeitskammer herrschenden Druck sowie einer am Ventilkörper ausgebildeten ersten Wirkfläche und die die Kraft der Ventilfeder unterstützende zweite Kraftkomponente sich aus der pneumatischen Druckdifferenz zwischen dem in der Arbeitskammer herrschenden Druck und dem in der Unterdruckkammer herrschenden Unterdruck sowie einer am Ventilkörper ausgebildeten zweiten Wirkfläche ergibt.

Eine genaue Anpassung des Regelungsprozesses an die innerhalb des Unterdruckbremskraftverstärkers herrschenden pneumatischen Verhältnisse wird nach einer vorteilhaften Weiterbildung der Erfindung dadurch erreicht, daß der im Gehäuse des Unterdruckbremskraftverstärkers herrschende Unterdruck gemessen und die Regelung des dem Elektromagneten zuzuführenden Stroms in Abhängigkeit vom ermittelten Unterdruckwert durchgeführt wird.

Die Ermittlung des gewünschten Drehzahl-Sollwertes erfolgt nach weiteren vorteilhaften Erfindungsmerkmalen in Abhängigkeit von dem Betätigungsweg oder der Betätigungsgeschwindigkeit eines den Unterdruckbremskraftverstärker mechanisch betätigenden Bremspedals, unter Umständen von der auf das Bremspedal einwirkenden Betätigungskraft. Andere Möglichkeiten der Ermittlung sehen außerhalb oder innerhalb des Fahrzeuges angeordnete Signalgeber, beispielsweise Verkehrsüberwachungssatelliten oder Radar- bzw. Abstandssensoren vor. Im Rahmen des vorgeschlagenen Verfahrens ist es auch besonders sinnvoll, die Einschaltdauer des Elektromagneten zu messen, und den gemessenen Wert zur Abschätzung von Temperatureinflüssen heranzuziehen.

Das erfindungsgemäße Verfahren wird im nachfolgenden Text an einem Ausführungsbeispiel im Zusammenhang mit der beiliegenden Zeichnung näher erläutert. In der Zeichnung zeigt:

Fig. 1    ein Funktions-Blockdiagramm einer Bremsanlage, mit der das erfindungsgemäße Verfahren zum Regeln des Bremsdruckes realisiert werden kann,

Fig. 2    das Steuerventil eines in der Bremsanlage nach Fig. 1 verwendbaren Unterdruckbremskraftverstärkers in größerem Maßstab und

Fig. 3    ein Diagramm der Abhängigkeit des zu regelnden Bremsdruckes von dem dem Elektromagneten zuzuführenden Strom $p = f(I)$.

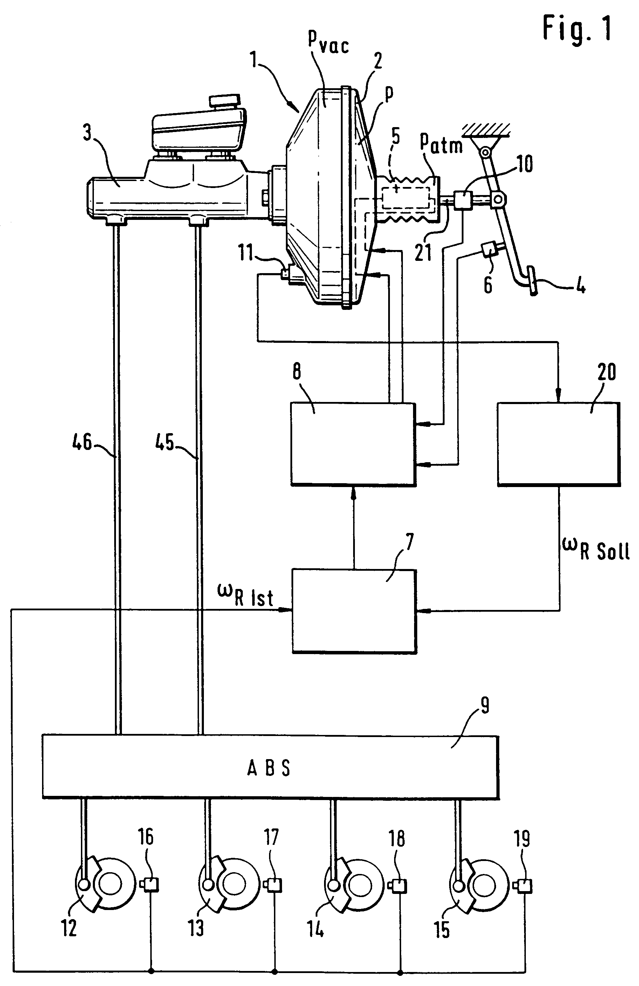

Die in Fig. 1 gezeigte Bremsanlage für Kraftfahrzeuge zur Durchführung des erfindungsgemäßen Regelverfahrens besteht im wesentlichen aus einer Betätigungseinheit 1, einer elektronischen Steuereinheit 8, Radbremsen 12,13,14,15, einem zwischen Radbremsen 12 bis 15 und Betätigungseinheit 1 angeordneten ABS/Hydroaggregat bzw. Druckmodulator 9 sowie einem nicht gezeigten ABS/ASR-Regler, der Steuersignale für den Druckmodulator 9 erzeugt.

Die Betätigungseinheit 1 besteht ihrerseits aus einem mittels eines Bremspedals 4 betätigbaren Unterdruckbremskraftverstärker 2, dem ein Hauptbremszylinder 3, vorzugsweise ein Tandemhauptzylinder, nachgeschaltet ist, dessen nicht gezeigte Druckräume über hydraulische Leitungen 45,46 mit dem Druckmodulator 9 in Verbindung stehen. An das Bremspedal 4 ist eine Betätigungsstange 21 angekoppelt, die eine Betätigung eines lediglich schematisch angedeuteten Steuerventils 5 ermöglicht, das den Aufbau eines pneumatischen Differenzdruckes im Gehäuse des Unterdruckbremskraftverstärkers 2 steuert.

Ein mit dem Bremspedal 4 in Wirkverbindung stehender Bremslichtschalter 6 ermöglicht die Erkennung einer auf dem Bremspedal 4 eingeleiteten Betätigung, während die Betätigungsgeschwindigkeit mittels einer Sensoreinrichtung sensiert wird, die vorzugsweise durch einen analog arbeitenden, dem Unterdruckbremskraftverstärker 2 zugeordneten Wegsensor 11 gebildet ist.

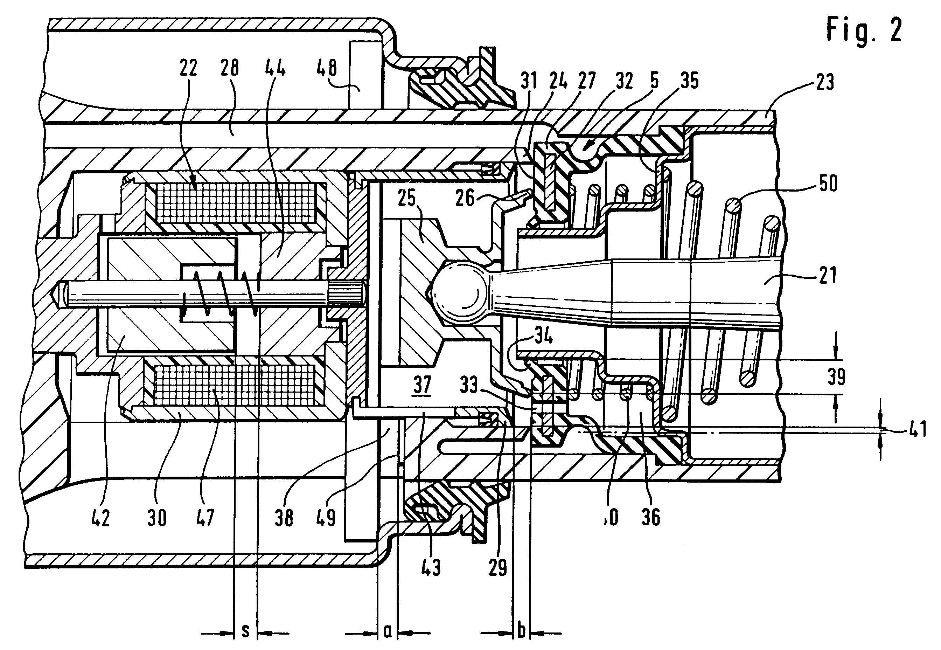

Der Wegsensor 11, der Bewegungen einer die Verstärkungskraft aufbringenden, nicht gezeigten beweglichen Wand sensiert und der vorzugsweise als lineares Potentiometer ausgebildet sein kann, erzeugt fortlaufend analoge Ausgangssignale, die einer zeitlich differenzierenden Bearbeitung (Differentiation) unterworfen werden, und die jeweils einer momentanen Betätigungsgeschwindigkeit des Bremspedals 4 entsprechen. Der Betätigungsgeschwindigkeit wird jeweils ein in einem lediglich schematisch angedeuteten Speicherblock 20 abgespeicherter Raddrehzahl-Sollwert $\omega_{RSoll}$ zugeordnet, der einer mit dem elektronischen Steuereinheit 8 zusammenwirkenden Vergleichsschaltung 7 zugeführt wird und der einer vom Fahrer durch Niederdrücken des Bremspedals 4 vorgewählten gewünschten Raddrehzahl entspricht. Jedem der nicht gezeigten Fahrzeugräder ist je ein Radsensor 16,17,18,19 zugeordnet, dessen einem Raddrehzahl-Istwert $\omega_{RIst}$ entsprechendes Signal in der Vergleichsschaltung 7 mit dem gewünschten Raddrehzahl-Sollwert $\omega_{RSoll}$ verglichen wird. In Abhängigkeit von dem in der Vergleichsschaltung 7 entstehenden Vergleichsergebnis erzeugt die elektronische Steuereinheit 8 Steuersignale zur Einstellung des Unterdruckbremskraftverstärkers 2. Dabei erfolgt eine Fremdbetätigung des Steuerventils 5 des Unterdruckbremskraftverstärkers 2 mittels eines durch die Steuersignale der elektronischen Steuereinheit 8 ansteuerbaren Elektromagneten 22 (Fig. 2) unabhängig von der am Bremspedal 4 eingeleiteten Betätigungskraft.

Wie insbesondere der Fig. 2 zu entnehmen ist, ist das Steuerventil 5 in einem im Gehäuse des in Fig.1 gezeigten Unterdruckbremskraftverstärkers 2 abgedichtet geführten Steuergehäuse 23 untergebracht und besteht aus einem am Steuergehäuse 23 ausgebildeten ersten Dichtsitz 24, einem an einem mit der Betätigungsstange 21 verbundenen Ventilkolben 25 ausgebildeten zweiten Dichtsitz 26 sowie einem mit beiden Dichtsitzen 24,26 zusammenwirkenden Ventilkörper 27. Außerdem ist im Steuergehäuse 23 ein seitlich verlaufender Kanal 28 vorgesehen, der eine Verbindung der Arbeitskammern des nicht gezeigten Unterdruckbremskraftverstärkers 2 ermöglicht.

Wie aus Fig. 2 weiter hervorgeht, weist der Ventilkörper 27 eine mit den beiden Dichtsitzen 24,26 zusammenwirkende ringförmige Dichtfläche 31 auf, die mit mehreren axialen Durchlässen 33 versehen ist und die mittels einer metallischen Versteifungsscheibe 32 versteift ist. An die Dichtfläche 31 schließt radial innen eine Dichtlippe 34 an, die im montierten Zustand des Ventilkörpers 27 im Steuergehäuse 23 an dessen Innenwand bzw. einem den Ventilkörper 27 haltenden Haltering 35 dichtend anliegt, so daß im Steuergehäuse 23 ein pneumatischer Raum 36 begrenzt ist. Die durch die Durchlässe 33 gebildeten, näher nicht bezeichneten Strömungskanäle verbinden den pneumatischen Raum 36 mit einem durch die Dichtsitze 24,26, begrenzten Ringraum 37, in dem ein mit der belüftbaren Arbeitskammer in Verbindung stehender pneumatischer Kanal 38 mündet, so daß der auf der Dichtfläche 31 abgewandten Seite des Ventilkörpers 27 ausgebildete pneumatische Raum 36 ständig mit der nicht gezeigten Arbeitskammer in Verbindung steht und am Ventilkörper 27 ein Druckausgleich stattfindet.

Der radial innere Durchmesser der Dichtlippe 34 und der am Ventilkolben 25 ausgebildete zweite Dichtsitz 26 begrenzen am Ventilkörper 27 eine erste pneumatische Wirkfläche 39, die, beaufschlagt mit dem pneumatischen Differenzdruck zwischen dem Atmosphärendruck und dem in der Arbeitskammer herrschenden Druck, eine erste Kraftkomponente ergibt, die der Kraft einer den Ventilkörper 27 in Schließrichtung des Steuerventils 5 vorspannenden Ventilfeder 40 entgegenwirkt und die mit zunehmender Belüftung der Arbeitskammer bzw. des Raumes 36 sich verringert. Durch die Einwirkung der pneumatischen Druckdifferenz zwischen dem in der Arbeitskammer herrschenden Druck und dem in der Unterdruckkammer herrschenden Unterdruck auf eine im mittleren Bereich des Ventilkörpers 27 ausgebildete zweite pneumatische Wirkfläche 41 entsteht eine zweite pneumatische Kraftkomponente, die die Wirkung der vorhin erwähnten Ventilfeder 40 unterstützt und die mit zunehmender Belüftung der Arbeitskammer bzw. des Raumes 36 steigt.

Um die vorhin erwähnte, von der Betätigungsstange 21 unabhängige Betätigung des Bremskraftverstärkers einzuleiten, ist radial zwischen dem ersten (24) und dem zweiten Dichtsitz 26 ein dritter Dichtsitz 29 vorgesehen, der mittels des Elektromagneten 22 betätigbar ist, der in einer axialen topfförmigen Verlängerung 30 des Ventilkolbens 25 angeordnet und demnach zusammen mit dem Ventilkolben 25 im Steuergehäuse 23 verschiebbar ist.

Der Elektromagnet 22 besteht aus einer auf einem innerhalb der Verlängerung 30 befestigten Führungsteil 44 aufgesteckten Spule 47 sowie einem darin verschiebbar angeordneten zylindrischen Anker 42, der mit einer im Steuergehäuse 23 abgedichtet geführten Hülse 43 in kraftübertragender Verbindung steht, an der der dritte Dichtsitz 29 ausgebildet ist, so daß eine Übertragung der vom Elektromagneten 22 aufgebrachten Fremdbetätigungskraft auf den dritten Dichtsitz 29 ermöglicht wird. Der dritte Dichtsitz 29 ist dabei gegenüber dem am Ventilkolben 25 ausgebildeten zweiten Dichtsitz 26 axial versetzt (s. Abstand b) angeordnet.

Bei einer durch Bestromen der Spule 47 eingeleiteten Fremdbremsung wird der Anker 42 in der Zeichnung nach rechts verschoben, wodurch der dritte Dichtsitz 29 zunächst nach Überbrückung des Abstandes "b" an der Dichtfläche 31 des Ventilkörpers 27 zur Anlage kommt. Durch diese Anlage wird der am Steuergehäuse 23 ausgebildete erste Dichtsitz 24 wirkungsmäßig überbrückt, so daß keine Verbindung zwischen den pneumatischen Arbeitskammern des Bremskraftverstärkers 2 mehr besteht. Anschließend bewegen sich der dritte Dichtsitz 29 und der Ventilkörper 27 zusammen weiter, wobei der zweite Dichtsitz 26 geöffnet und die belüftbare Arbeitskammer des Unterdruckbremskraftverstärkers 2 belüftet wird. Die Bewegung des dritten Dichtsitzes 29 dauert solange, bis der Anker 42 am Führungsteil 44 anschlägt und der Spalt "s" zwischen den beiden Teilen zu Null wird. Bei fehlender Betätigungskraft an der Betätigungsstange 21 läuft das Steuergehäuse 23 relativ zum Ventilkolben 25 um einen Weg vor, der dem Abstand "a" zwischen einem die Bewegung des Ventilkolbens 25 begrenzenden Querglied 48 und einer am Steuergehäuse 23 ausgebildeten Anschlagfläche 49 entspricht. Ursache hierfür ist eine Kolbenstangenrückholfeder 50, die über die Betätigungsstange 21 den Ventilkolben 25 nach rechts bewegt und versucht, den zweiten Dichtsitz 26 wieder zu schließen. Da sich aber der dritte Dichtsitz 29 aufgrund der festen Verbindung von Elektromagnet 22 und Ventilkolben 25 synchron mitbewegt, wird der Spalt zwischen dem Ventilkörper 27 und dem zweiten Dichtsitz 26 offengehalten, und zwar um das Maß s - b. Hierdurch wird die belüftbare Arbeitskammer des Bremskraftverstärkers 2 mit der Atmosphäre verbunden und es wird eine Bremskraft erzeugt.

Um zu gewährleisten, daß der Elektromagnet 22 nach Beendigung des fremdkraftunterstützten Bremsung auch sicher abgeschaltet wird, ist schließlich eine elektrische Schalteinrichtung 10 vorgesehen, die in Fig. 1 lediglich schematisch angedeutet ist.

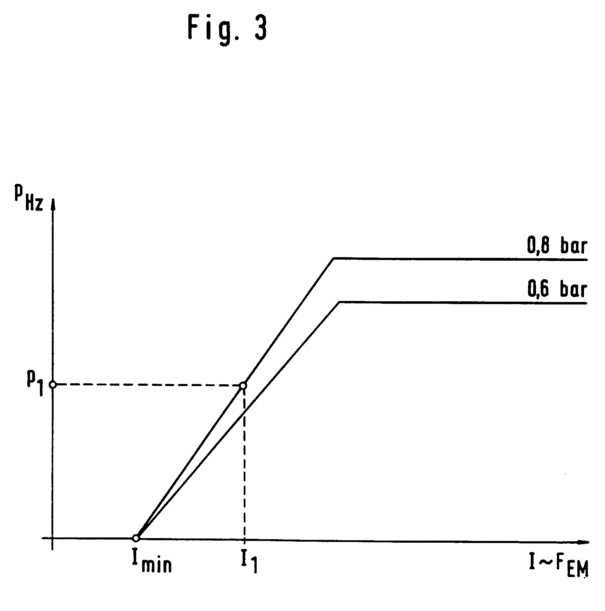

Wie bereits oben erwähnt wurde, werden während der Regelung der der Betätigungsgeschwindigkeit des Bremspedals 4 zugeordnete gewünschte Raddrehzahl-Sollwert $\omega_{RSoll}$ und der am Rad ermittelte Raddrehzahl-Istwert $\omega_{RIst}$ in der Vergleichsschaltung 7 miteinander verglichen. Durch ein von dem Vergleichsergebnis abhängiges Signal wird die elektronische Steuereinheit 8 angesteuert, die Steuer- bzw. Stromsignale für den das Steuerventil 5 des Unterdruckbremskraftverstärkers 2 fremdbetätigenden Elektromagneten 22 erzeugt. Dabei muß dafür gesorgt werden, daß die vom Elektromagneten 22 aufgebrachte Fremdbetätigungskraft größer ist als die vorhin beschriebene Summe der am Ventilkörper 27 des Steuerventils 5 wirkenden Kraftkomponenten. Aus der Funktionsbeschreibung des in Fig. 2 dargestellten Steuerventils 5 geht hervor, daß eine Erhöhung der vom Elektromagneten 22 aufgebrachten Fremdbetätigungskraft bzw. des dem Elektromagneten 22 zugeführten Stromes eine Erhöhung des vom Unterdruckbremskraftverstärker 2 im Hauptbremszylinder 3 erzeugten hydraulischen Druckes hervorruft. Die Abhängigkeit des im Hauptbremszylinder 3 erzeugten hydraulischen Druckes von der elektromagnetischen Fremdbetätigungskraft bzw. dem dem Elektromagneten 22 zuzuführenden elektrischen Strom ist in Fig. 3 der Zeichnung dargestellt.

Wenn sich aus dem Vergleich zwischen dem der Pedalantrittsgeschwindigkeit zugeordneten Drehzahl-Sollwert $\omega_{RSoll}$ und dem von einem der Sensoren 16 bis 19 ermittelten Drehzahl-Istwert $\omega_{RIst}$ ergibt, daß der Sollwert $\omega_{RSoll}$ kleiner ist als der Istwert, wird das Steuerventil 5 des Unterdruckbremskraftverstärkers 2 im Sinne einer Druckerhöhung im Hauptbremszylinder 3 angesteuert, bis die Abweichung zwischen beiden Drehzahlwerten Null wird. Der im Hauptbremszylinder 3 eingesteuerte Druck kann durch Bestromen des Elektromagneten 22 mit einem konstanten Strom gehalten werden. Ein Druckabbau im Hauptbremszylinder 3 wird während der Regelung durch entsprechende Verringerung des dem Elektromagneten 22 zuzuführenden Stroms erreicht. Ergibt der Vergleich hingegen, daß der Sollwert größer ist als der Istwert, so kann der in den Radbremsen eingesteuerte zu hohe Bremsdruck entweder durch einen Eingriff des vorhandenen ABS-Systems oder durch eine Verringerung des dem Elektromagneten 22 zugeführten Stroms gesenkt werden.

**Patentansprüche**

1.  Verfahren zum Regeln des Bremsdruckes in einer mit einem ABS-System ausgerüsteten Kraftfahrzeugbremsanlage, die einen unabhängig vom Fahrerwillen mittels eines Elektromagneten (22) betätigbaren Unterdruckbremskraftverstärker (2) sowie einen dem Unterdruckbremskraftverstärker (2) nachgeschalteten Hauptbremszylinder (3) aufweist, wobei Drehzahlen der einzelnen Fahrzeugräder ermittelt werden, dadurch **gekennzeichnet**, daß ein an jedem Rad während einer Abbremsung gemessener Drehzahl-Istwert ($\omega_{RIst}$) mit einem abgespeicherten gewünschten Drehzahl-Sollwert ($\omega_{RSoll}$) verglichen wird und daß in Abhängigkeit von dem Vergleichsergebnis der dem Elektromagneten (22) zuzuführende Strom direkt proportional so geregelt wird, daß jedem Wert der vom Elektromagneten (22) aufgebrachten Fremdbetätigungskraft ein Wert des im Hauptbremszylinder (3) eingesteuerten hydraulischen Druckes zugeordnet wird, derart, daß einer Erhöhung der Fremdbetätigungskraft eine Erhöhung des hydraulischen Druckes entspricht.

2. Verfahren nach Anspruch 1, wobei der Elektromagnet den Ventilkörper eines den im Bremskraftverstärker wirkenden pneumatischen Differenzdruck steuernden Steuerventils betätigt, dadurch **gekennzeichnet**, daß der dem Elektromagneten (22) zuzuführende Strom proportional dem auf den Ventilkörper (27) wirkenden pneumatischen Differenzdruck geregelt wird.

3. Verfahren nach Anspruch 1 oder 2, dadurch gekennzeichnet, daß eine mit dem Ventilkörper (27) des Steuerventils (5) zusammenwirkende, pneumatische Wirkfläche (41) vorgesehen ist, die, mit dem pneumatischen Differenzdruck beaufschlagt, eine Kraft aufbringt, die der vom Elektromagneten (22) aufgebrachten Betätigungskraft entgegenwirkt.

4. Verfahren nach Anspruch 3, wobei der Unterdruckbremskraftverstärker (2) eine evakuierbare Unterdruckkammer sowie eine belüftbare Arbeitskammer aufweist, dadurch gekennzeichnet, daß die der vom Elektromagneten (22) aufgebrachten Fremdbetätigungskraft entgegenwirkende Kraft sich aus der Kraft einer den Ventilkörper (27) in Schließrichtung des Steuerventils (5) vorspannenden Ventilfeder (40) sowie zweier entgegengesetzt zueinander wirkender pneumatischer Kraftkomponenten zusammensetzt, wobei die erste, der Kraft der Ventilfeder (40) entgegenwirkende Kraftkomponente sich aus der pneumatischen Druckdifferenz zwischen dem Atmosphärendruck und dem in der Arbeitskammer herrschenden Druck sowie einer am Ventilkörper (27) ausgebildeten ersten Wirkfläche (39) und die die Kraft der Ventilfeder (40) unterstützende zweite Kraftkomponente sich aus der pneumatischen Druckdifferenz zwischen dem in der Arbeitskammer herrschenden Druck und dem in der Unterdruckkammer herrschenden Unterdruck sowie einer am Ventilkörper (27) ausgebildeten zweiten Wirkfläche (41) ergibt.

5. Verfahren nach einem der vorhergehenden Ansprüche 1 bis 4, dadurch **gekennzeichnet**, daß der im Gehäuse des Unterdruckbremskraftverstärkers (2) herrschende Unterdruck gemessen und die Regelung des dem Elektromagneten (22) zuzuführenden Stroms in Abhängigkeit vom ermittelten Unterdruckwert durchgeführt wird.

6. Verfahren nach einem der vorhergehenden Ansprüche 2 bis 5, wobei der Unterdruckbremskraftverstärker mittels eines Bremspedals betätigbar ist, dadurch **gekennzeichne**t, daß die Betätigungsgeschwindigkeit des Bremspedals (4) sensiert wird, wobei die Ermittlung des gewünschten Drehzahl-Sollwertes ($\omega_{RSoll}$) in Abhängigkeit von dem sensierten Wert der Bremspedalbetätigungsgeschwindigkeit erfolgt.

7. Verfahren nach dem Oberbegriff des Anspruchs 6, dadurch **gekennzeichnet**, daß der Betätigungsweg des Bremspedals (4) sensiert wird, wobei die Ermittlung des gewünschten Drehzahl-Sollwertes ($\omega_{RSoll}$) in Abhängigkeit von dem sensierten Wert des Bremspedalbetätigungsweges erfolgt.

8. Verfahren nach dem Oberbegriff des Anspruchs 6, dadurch **gekennzeichnet**, daß die auf das Bremspedal (4) wirkende Betätigungskraft sensiert wird, wobei die Ermittlung des gewünschten Drehzahl-Sollwertes ($\omega_{RSoll}$) in Abhängigkeit vom sensierten Wert der auf das Bremspedal (4) wirkenden Betätigungskraft durchgeführt wird.

9. Verfahren nach einem der vorhergehenden Ansprüche, dadurch **gekennzeichnet**, daß die die Ermittlung des gewünschten Drehzahl-Sollwertes ($\omega_{RSoll}$) in Abhängigkeit vom Ausgangssignal eines an einer außerhalb des Fahrzeuges sich befindenden Stelle angeordneten Signalgebers, z. B. eines Verkehrüberwachungssatellits erfolgt.

10. Verfahren nach einem der Ansprüche 1 bis 8, dadurch **gekennzeichnet**, daß die die Ermittlung des gewünschten Drehzahl-Sollwertes ($\omega_{RSoll}$) in Abhängigkeit vom Ausgangssignal eines an einer innerhalb des Fahrzeuges sich befindenden Stelle angeordneten Signalgebers, z. B. eines Abstandsensors, erfolgt.

11. Verfahren nach einem der vorhergehenden Ansprüche 2 bis 10, dadurch **gekennzeichnet**, daß die Einschaltdauer des Elektromagneten (22) ermittelt und zur Abschätzung von Temperatureinflüssen herangezogen wird.

**Claims**

1. Method of controlling the braking pressure in an automotive vehicle brake system equipped with an ABS system, which includes a vacuum brake power booster (2) operable by an electromagnet (22) irrespective of the driver's wish, and a master brake cylinder (3) connected downstream of the vacuum brake power booster (2), wherein the rotational speed of the individual vehicle wheels is determined, **characterized** in that an actual rotational speed value ($\omega_{RIst}$) measured on each wheel during braking is compared with a memorized, desired rotational speed nominal value ($\omega_{RSoll}$), and in that the current being supplied to the electromagnet (22) is controlled directly proportionally as a function of the comparison result so that assigned to each value of the independent actuating force generated by the electromagnet (22) is a value of the hydraulic pressure introduced into the master brake cylinder (3) to such effect that an increase of the hydraulic pressure corresponds to an increase of the independent actuating force.

2. Method as claimed in claim 1, wherein the electromagnet actuates the valve member of a control valve which governs the pneumatic differential pressure acting in the brake power booster, **characterized** in that the current being supplied to the electromagnet (22) is controlled proportionally to the pneumatic differential pressure which acts upon the valve member (27).

3. Method as claimed in claim 1 or claim 2, **characterized** in that a pneumatic effective surface (41) interacting with the valve member (27) of the control valve (5) is provided and, when acted upon by the pneumatic differential pressure, generates a force that counteracts the actuating force generated by the electromagnet (22).

4. Method as claimed in claim 3, wherein the vacuum brake power booster (2) includes an evacuatable vacuum chamber and a ventilatable working chamber, **characterized** in that the force counteracting the independent actuating force generated by the electromagnet (22) includes the force of a valve spring (40), which preloads the valve member (27) in the closing direction of the control valve (5), and two pneumatic force components which act in opposition to each other, wherein the first force component, which counteracts the force of the valve spring (40), is produced by the pneumatic pressure difference between the atmospheric pressure and the pressure prevailing in the working chamber, and by a first effective surface (39) provided on the valve member (27), and the second force component supporting the force of the valve spring (40) is produced by the pneumatic pressure difference between the pressure prevailing in the working chamber and the vacuum prevailing in the vacuum chamber, and by a second effective surface (41) provided on the valve member (27).

5. Method as claimed in any one of the preceding claims 1 to 4, **characterized** in that the vacuum prevailing in the housing of the vacuum brake power booster (2) is measured, and the current being supplied to the electromagnet (22) is controlled as a function of the vacuum value determined.

6. Method as claimed in any one of the preceding claims 2 to 5, wherein the vacuum brake power booster is operable by a brake pedal, **characterized** in that the actuating speed of the brake pedal (4) is sensed, and the desired rotational speed nominal value ($\omega_{RSoll}$) is determined as a function of the sensed value of the brake pedal actuating speed.

7. Method as claimed in the preamble of claim 6, **characterized** in that the actuating travel of the brake pedal (4) is sensed, and the desired rotational speed nominal value ($\omega_{RSoll}$) is determined as a function of the sensed value of the brake pedal actuating speed.

8. Method as claimed in the preamble of claim 6, **characterized** in that the actuating force acting upon the brake pedal (4) is sensed, and the desired rotational speed nominal value ($\omega_{RSoll}$) is determined as a function of the sensed value of the actuating force which acts upon the brake pedal (4).

9. Method as claimed in any one of the preceding claims, **characterized** in that the desired rotational speed nominal value ($\omega_{RSoll}$) is determined as a function of the output signal of a signalling device, for example, a traffic monitoring satellite, which is arranged at a location outside the vehicle.

10. Method as claimed in any one of claims 1 to 8, **characterized** in that the desired rotational speed nominal value ($\omega_{RSoll}$) is determined as a function of the output signal of a signalling device, for example, a distance sensor, which is arranged at a location inside the vehicle.

11. Method as claimed in any one of the preceding claims 2 to 10,

**characterized** in that the on-time of the electromagnet (22) is determined and taken into account in the assessment of temperature effects.

## Revendications

1. Procédé de réglage de la pression de freinage dans une installation de freinage de véhicule automobile qui est équipée d'un système antiblocage et qui présente un amplificateur de frein à dépression (2), pouvant être actionné indépendamment de la volonté du conducteur au moyen d'un électroaimant (22), ainsi qu'un maître-cylindre (3) relié à la suite de l'amplificateur de frein à dépression (2), les vitesses de rotation des différentes roues du véhicule étant déterminées, **caractérisé** en ce qu'une valeur réelle ($\omega_{RR}$) de vitesse de rotation, mesurée sur chaque roue pendant un freinage, est comparée à une valeur de consigne ($\omega_{RC}$) souhaitée et mémorisée de vitesse de rotation, et en ce que, en fonction du résultat de la comparaison, le courant électrique à apporter à l'électroaimant (22) est réglé de façon directement proportionnelle de telle sorte qu'une valeur de la pression hydraulique établie dans le maître-cylindre (3) est associée à chaque valeur de la force d'actionnement indépendante exercée par l'électroaimant (22), de sorte telle qu'une augmentation de la pression hydraulique correspond à une augmentation de la force d'actionnement indépendante.

2. Procédé selon la revendication 1, l'électroaimant actionnant le corps de soupape d'une soupape de commande commandant la pression pneumatique différentielle agissant dans l'amplificateur de frein, **caractérisé** en ce que le courant électrique à apporter à l'électroaimant (22) est réglé proportionnellement à la pression pneumatique différentielle agissant sur le corps de soupape (27).

3. Procédé selon la revendication 1 ou 2, **caractérisé** en ce qu'est prévue une face pneumatiquement active (41) qui coopère avec le corps de soupape (27) de la soupape de commande (5) et qui, en étant sollicitée par la pression pneumatique différentielle, exerce une force qui s'oppose à la force d'actionnement exercée par l'électroaimant (22).

4. Procédé selon la revendication 3, l'amplificateur de frein à dépression (2) présentant une chambre de dépression pouvant être mise au vide et une chambre de travail pouvant être mise à l'air, **caractérisé** en ce que la force qui s'oppose à la force d'actionnement indépendante exercée par l'électroaimant (22) se compose de la force d'un ressort de soupape (40), précontraignant le corps de soupape (27) dans la direction de fermeture de la soupape de commande (5), et de deux composantes de force pneumatique agissant en opposition mutuelle, la première composante de force, agissant en opposition à la force du ressort de soupape (40), s'obtenant à partir de la pression pneumatique différentielle entre la pression atmosphérique et la pression régnant dans la chambre de travail ainsi que d'une première face active (39) configurée sur le corps de soupape (27), et la deuxième composante de force, assistant la force du ressort de soupape (40), s'obtenant à partir de la pression pneumatique différentielle entre la pression régnant dans la chambre de travail et la pression régnant dans la chambre de dépression ainsi que d'une deuxième face active (41) configurée sur le corps de soupape (27).

5. Procédé selon l'une des revendications précédentes 1 à 4, **caractérisé** en ce qu'on mesure la dépression régnant dans le boîtier de l'amplificateur de frein à dépression (2), et le réglage du courant électrique à apporter à l'électroaimant (22) est effectué en fonction de la valeur déterminée de dépression.

6. Procédé selon l'une des revendications précédentes 2 à 5, l'amplificateur de frein à dépression pouvant être actionné au moyen d'une pédale de frein, **caractérisé** en ce qu'on détecte la vitesse d'actionnement de la pédale de frein (4), la détermination de la valeur de consigne souhaitée ($\omega_{RC}$) de vitesse de rotation s'effectuant en fonction de la valeur détectée de la vitesse d'actionnement de la pédale de frein.

7. Procédé selon le préambule de la revendication 6, **caractérisé** en ce qu'on détecte la course d'actionnement de la pédale de frein (4), la détermination de la valeur de consigne souhaitée ($\omega_{RC}$) de vitesse de rotation s'effectuant en fonction de la valeur détectée de la course d'actionnement de la pédale de frein.

8. Procédé selon le préambule de la revendication 6, **caractérisé** en ce qu'on détecte la force d'actionnement agissant sur la pédale de frein (4), la détermination de la valeur de consigne souhaitée ($\omega_{RC}$) de vitesse de rotation étant effectuée en fonction de la valeur détectée de la force d'actionnement agissant sur la pédale de frein (4).

9. Procédé selon l'une des revendications précédentes, **caractérisé** en ce que la détermination de la valeur de consigne souhaitée ($\omega_{RC}$) de vitesse de rotation s'effectue en fonction du signal de sortie d'un transmetteur de signaux disposé en un endroit se trouvant à l'extérieur du véhicule, par exemple d'un satellite de surveillance du trafic.

**10.** Procédé selon l'une des revendications 1 à 8, **caractérisé** en ce que la détermination de la valeur de consigne souhaitée ($\omega_{RC}$) de vitesse de rotation s'effectue en fonction du signal de sortie d'un transmetteur de signaux disposé en un endroit se trouvant à l'intérieur du véhicule, par exemple d'un détecteur de distance.

**11.** Procédé selon l'une des revendications précédentes 2 à 10, **caractérisé** en ce qu'on détermine la durée de service de l'électroaimant (22), et on s'en sert pour évaluer des effets de température.

EP 0 760 765 B1

Fig. 1

Fig. 2

EP 0 760 765 B1

Fig. 3